# EUROPEAN PATENT APPLICATION

(11) **EP 3 540 183 A1**
(43) Date of publication of application: **18.09.2019**
(21) Application number: 19157652.9
(22) Date of filing: 18.02.2019
(51) Int. Cl.: F01D 21/00, F01D 25/12, F01D 25/14, F01D 25/36, F01D 25/26

(54) **GAS TURBINE ENGINE AND METHOD OF MAINTAINING A GAS TURBINE ENGINE**

(30) Priority: 16.03.2018 GB 201804214
(71) Applicant: Rolls-Royce plc, London SW1E 6AT (GB)
(72) Inventor: Doesburg, Steven, Derby, Derbyshire DE24 8BJ (GB)
(74) Representative: Rolls-Royce plc

(57) **Abstract**

A method of maintaining a gas turbine engine with a core, whilst the gas turbine engine is shut down comprises: providing an axial airflow through a core of the gas turbine engine, during a time period after shut-down and before start-up of the gas turbine engine. A gas turbine engine for an aircraft comprises an engine core (11) with at least one turbine (17, 19), at least one compressor (14, 15), at least one core shaft (26, 27) connecting the at least one turbine (17, 19) to the at least one compressor (14, 15); and an airflow generator configured to generate an axial airflow though the engine core (11) during a time period after shut-down and before start-up of the gas turbine engine (10).

## Description

The present disclosure relates to a gas turbine engine and method of maintaining a gas turbine engine. In particular, the disclosure relates to a method of maintaining a gas turbine engine whilst the gas turbine engine is shut down.

### BACKGROUND

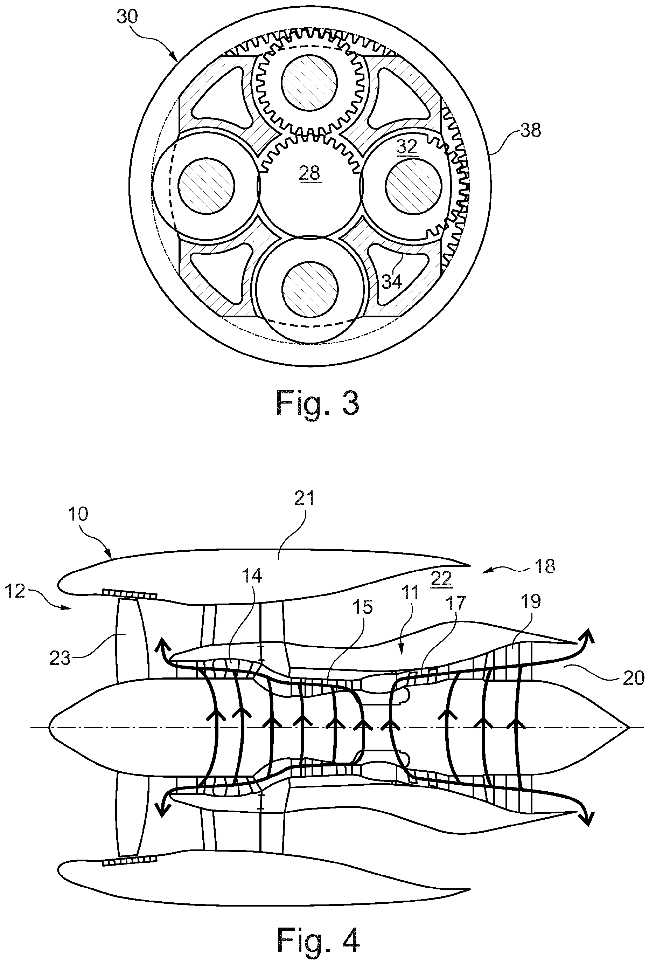

Gas turbine engines typically experience post shut-down thermal distortion within the engine core due to the development of an asymmetric temperature gradient within the engine core. During normal operation of a gas turbine engine, and upon engine shut-down, an axisymmetric temperature profile exists within the core of the gas turbine engine. However, natural convection driven by buoyant forces (i.e. the rising of hot air) causes the temperature profile to become asymmetric about the longitudinal axis of the engine core over time. The resulting buoyant airflow field is shown in Figure 4. This creates an asymmetric, diametric temperature gradient within the engine core. This may cause components within the engine core to be distorted.

Components of the engine core affected include compressor rotors and statics, turbine rotors and statics and core shafts which drive rotation of the rotors. The distortion of these components is also referred to as rotor bow and casing bow for rotors and statics respectively. The temperature gradient can cause the axes of the rotors and statics to curve (bow). Rotor bow and casing bow can cause the tips of the rotor blades to rub against the casing. This can damage the blades and the casings, can stall the engine and/or cause excessive vibrations capable of destroying compressor and turbine stages.

Rotor bow can be corrected by inserting a dwell time of several minutes into the start-up sequence of the gas turbine engine. During this dwell time, a bowed rotor can be straightened out by rotating the rotor at a high, sub-idle rotational speed before ignition of the gas turbine engine. However, this significantly impacts aircraft turnaround time which is a major driver for airline profitability.

Rotor bow can be prevented by rotating a rotor very slowly (e.g. a few rotations per minute) so that the formation of an asymmetric temperature gradient within the rotor can be prevented. However, the asymmetric temperature gradient still exists within the engine core.

The present disclosure aims to at least partially address some of the problems discussed above.

### BRIEF SUMMARY

According to a first aspect there is provided a method of maintaining a gas turbine engine whilst the gas turbine engine is shut down, the gas turbine engine comprising a core and the method comprising: providing an axial airflow through a core of the gas turbine engine, during a time period after shut-down and before start-up of the gas turbine engine.

According to a second aspect there is provided a method of maintaining a gas turbine engine whilst the gas turbine engine is shut down, the method comprising: establishing an airflow within a core of the gas turbine engine to reduce axial asymmetry in an airflow field within the core, during a time period after shut-down and before start-up of the gas turbine engine.

The airflow may enter the core through a first end thereof and exits the core through a second end thereof, the second end being opposite the first end in an axial direction of the core. The airflow may disrupt or prevent formation of a buoyant airflow field within the core. The airflow may generate a substantially axisymmetric airflow field within the core.

The core may comprise a compressor and the airflow is provided by rotating the compressor. The compressor may be rotated at a speed of from 10 rpm to 100 rpm.

The time period for which the airflow is provided may elapse when one or more of the following conditions are met: the core temperature falls below a predetermined threshold temperature, a predetermined time-period has elapsed, and start-up of the gas turbine engine is commenced.

According to a third aspect there is provided a gas turbine engine for an aircraft, the gas turbine engine comprising: an engine core comprising at least one turbine, at least one compressor, at least one core shaft connecting the at least one turbine to the at least one compressor; and an airflow generator configured to generate an axial airflow through the engine core during a time period after shut-down and before start-up of the gas turbine engine.

The generated airflow may enter the core through a first end thereof and exits the core through a second end thereof, the second end being opposite the first end in an axial direction of the core.

The generated airflow may be configured to disrupt or prevent formation of a buoyant airflow field within the core. Alternatively, or additionally, the generated airflow may be configured to generate a substantially axisymmetric airflow field within the core.

The airflow generator may comprise a motor for rotating a compressor and a controller for controlling the motor. Optionally, the controller may be configured to control the motor to rotate the compressor at a speed of from 10 rpm to 100 rpm.

The core may comprise first and second compressors configured to operate at lower and higher pressures respectively. The motor may be configured to rotate the first compressor. Alternatively, or additionally, the motor may be configured to rotate the second compressor.

The gas turbine engine may comprise an auxiliary gearbox between the motor and the at least one core shaft for transmitting power from the motor to the compressor of the air flow generator.

Optionally, the motor may be a starter motor configured to be operated during start-up of the gas turbine engine. Alternatively, or additionally, the motor may be configured to switch to a generator mode after start-up of the gas turbine engine. Optionally, the motor may be a variable frequency electric motor.

The motor may be configured to be powered by a power unit which is separate from the aircraft on which the gas turbine engine is provided. Alternatively, or additionally, the aircraft on which the gas turbine engine is provided may comprise an auxiliary power unit and the motor may be configured to be powered by the auxiliary power unit.

The gas turbine engine may further comprise a fan located upstream of the engine core, the fan comprising a plurality of fan blades; and a gearbox that receives an input from the at least one core shaft and outputs drive to the fan so as to drive the fan at a lower rotational speed than the core shaft.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core. Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of - 55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the Figures, in which:
Figure 1 is a sectional side view of a gas turbine engine;
Figure 2 is a close up sectional side view of an upstream portion of a gas turbine engine;
Figure 3 is a partially cut-away view of a gearbox for a gas turbine engine;
Figure 4 is a sectional side view of a gas turbine engine with arrows indicating a typical buoyant airflow field within the core;
Figure 5 is a sectional side view of a gas turbine engine with arrows indicating an axial airflow through the core.

### DETAILED DESCRIPTION

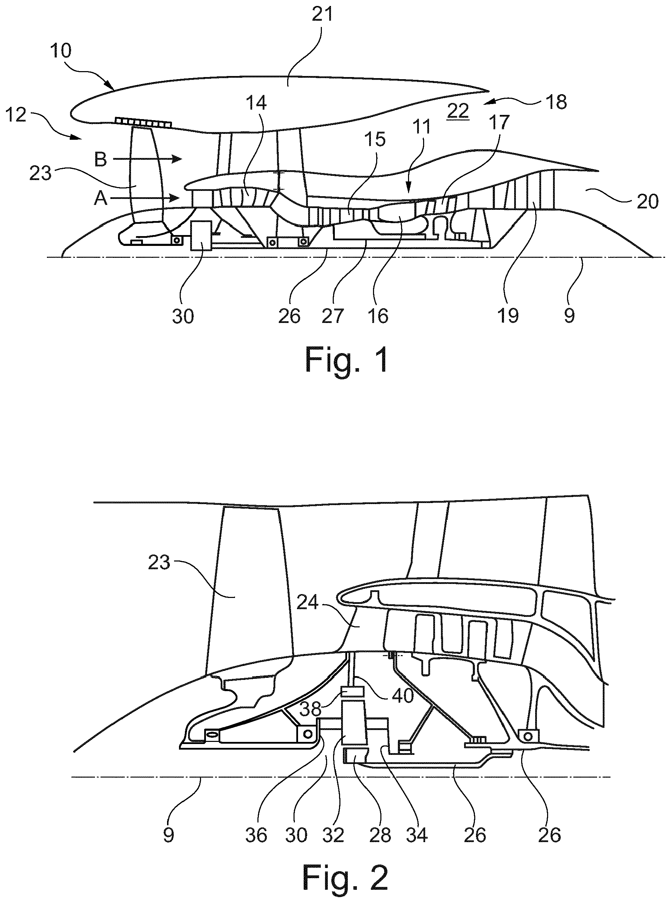

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30. The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4 shows a typical buoyant airflow field that can be found within the engine core 11 of a typical gas turbine engine 10 whilst the gas turbine engine 10 is shut down. In order to prevent or disrupt formation of such an airflow field within the engine core 11, the present disclosure provides a method of maintaining a gas turbine engine 10 whilst the gas turbine engine 10 is shut down, i.e. during a time period after shut-down and before start-up of the gas turbine engine 10.

Shut-down of the gas turbine engine 10 may refer to a time at which the gas turbine engine 10 stops combusting fuel to drive the turbines 17, 19. After this time, the compressors 14, 15 and turbines 17, 19 within the core 11 begin to decelerate (known as spooling down) and the engine core 11 temperature begins to cool.

Start-up of the gas turbine engine 10 may refer to a time at which a start-up sequence is initiated. The start-up sequence may comprise the following stages:
1) A compressor 14, 15 (e.g. the high pressure compressor 15) may be rotated by a starter motor (or alternative started system) in order to provide sufficient air to the combustion equipment 16 to support combustion.
2) Then an igniter, forming part of the combustion equipment 16, may be turned on and fuel input to the combustion equipment 16 so that the engine core 11 begins to combust fuel to drive the turbines 17, 19.
3) As the turbines 17, 19 accelerate, they will reach a self-sustaining speed together with the compressors 14, 15 and fan 13 driven by the turbines 17, 19. In other words, the power provided to the turbines 12, 19 by the combustion of fuel by the combustion equipment 16 is sufficient to drive the fan 13 and compressors 14, 15 at a speed necessary for providing sufficient air to the combustion equipment 16 to support the required combustion.
4) Then, the starter motor stops providing torque to the compressor 14, 15. For example, the starter motor may physically disengage from the compressor 14, 15. Alternatively, the starter motor may switch from a motor mode to a generator mode for providing electrical power to auxiliary aircraft systems. The turbines 17, 19 of the gas turbine engine 10 may then continue to accelerate until they reach an idling speed.

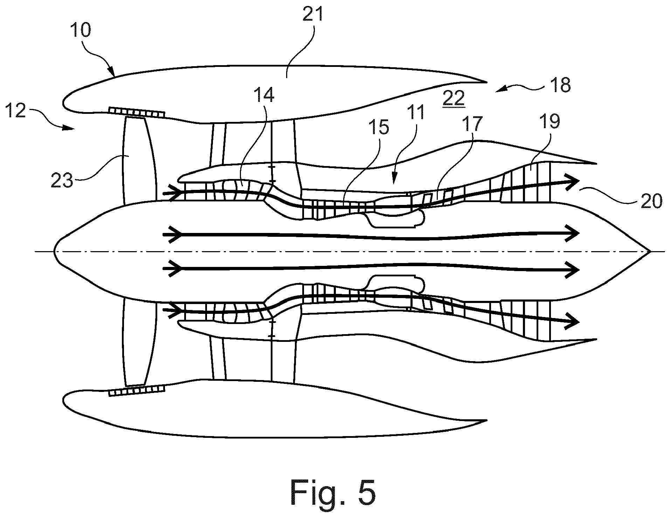

The present disclosure provides a method of maintaining a gas turbine engine 10 whilst the gas turbine engine 10 is shut-down, the method comprising providing an axial airflow through the core 11 of the gas turbine engine 10, during a time period after shut-down and before start-up of the gas turbine engine 10. An exemplary axial airflow is shown in Figure 5.

As shown in Figure 5, the axial airflow (indicated by arrows in Figure 5) travels in a substantially axial direction through the engine core 11. The air flowing within the core 11 may have a substantially axial velocity (e.g. in a direction from the front-to-the back of the gas turbine engine 10). As shown in Figure 5, the airflow may enter the core 11 through a first end thereof an exit the core through a second end thereof, the second end being opposite to the first end in an axial direction of the core 11 (e.g. the first end may be the front end of the core 11). The air flowing through the core 11 may pass through each of the compressors 14, 15 and each of the turbines 17, 19.

As shown in Figure 5, the airflow may generate a substantially axisymmetric airflow field within the core 11. In other words, the velocity profile of the airflow within the core may have cylindrical symmetry about the principal rotational axis 9.

The axial airflow shown in Figure 5 is in contrast to the airflow shown in Figure 4, in which the air travels in a substantially circumferential direction, driven by buoyant forces. The air within the core in this case has a substantially vertical velocity. Buoyant forces refer to forces generated by density changes in the air within the core (resulting from temperature changes). These buoyant forces drive natural convection within the engine core 11. A buoyant airflow field refers to an airflow driven by buoyant forces.

The axial airflow provided within the core 11 disrupts and/or prevents the buoyant airflow field shown in Figure 4. By imparting a sufficient axial velocity component to air within the core 11, a velocity component resulting from buoyant forces may become negligible. This may reduce the temperature gradient that may otherwise form within the engine core 11 and cause rotor bow and/or casing bow.

The axial airflow through the core 11 of the gas turbine engine 10 may be provided by an airflow generator. Any system capable of providing an axial airflow with in the core may be used as an airflow generator.

In some arrangements, the airflow generator may comprise a motor for rotating a compressor 14, 15 of the engine core 11 and a controller for controlling the motor. As the motor rotates the compressor 14, 15, the compressor 14, 15 draws air from an upstream side of the compressor 14, 15 and ejects air at a downstream side of the compressor, thus providing an axial airflow through the engine core 11.

The motor may be configured to rotate the compressor 14, 15 at a speed of from 10 rpm to 100 rpm. For example, in some arrangements, the speed of rotation may be on the order of any of the following: 10, 15, 20, 25, 30, 35, 40, 45, 50, 55, 60, 65, 70, 75, 80, 85, 90, 95 or 100 rpm. The speed of rotation may be in an inclusive range bounded by any two of the values in the previous sentence (i.e. the values may form upper or lower bounds). Such speeds are typically sufficient to create an axial airflow through the engine core 11. The rotation speed may be selected to be the minimum speed required to disrupt the buoyant airflow field within the core 11. The optimal rotation speed may vary depending on the specific gas turbine engine and may be affected by factors including the size of the gas turbine engine, the volume of air in the engine core, and the number and size of the compressor and turbine stages. Atmospheric conditions, the temperature profile of the engine components upon shutdown, the aerodynamic design of the compressor being driven, and the aerodynamics within the rest of the airflow path may further affect the required speed.

Higher speeds than those mentioned above may generate the required airflow. However, the higher the speed, the less economical the system becomes. This is because more power and/or larger motors may be required. An upper limit may be the highest speed at which the specific motor used can rotate the compressor 14, 15. In some arrangements, the rotational speed may exceed the ranges discussed above. For example, the rotational speed of the compressors 14, 15 may be on the order of any of the following: 100, 200, 300, 400, 500, 600, 700, 800, 900 or 1000 rpm. The speed of rotation may be in an inclusive range bounded by any two of the compressor speed values disclosed herein (i.e. the values may form upper or lower bounds).

The motor may be configured to rotate either the high pressure compressor 15 and/or the low pressure compressor 14 to provide an axial airflow through the engine core 11. The motor may connect to the core shaft 26, 27 associated with the compressor 14, 15 via an auxiliary gearbox for transmitting power from the motor to the compressor 14, 15. The auxiliary gearbox is distinct from the gearbox 30 for driving the fan 13.

The motor may be specifically provided to rotate the compressor 14, 15 during shut-down of the gas turbine engine 10. In other words, rotating the compressor 14, 15 during shut-down may be the only function of the motor. Alternatively, the motor may be a starter motor also configured to be operated during start-up of the gas turbine engine 10 (e.g. configured to accelerate the compressor 14, 15 until the gas turbine engine 10 reaches a self-sustaining speed). In other words, the airflow generator may comprise existing systems already present within the gas turbine engine 10 and additionally provided for functions other than rotating the compressor 14, 15 during shut-down.

The motor may be configured to switch to a generator mode after start-up of the gas turbine engine 10, i.e. when the starter motor is no longer required to provide torque to the compressor 14, 15. The motor may be a variable frequency electric motor, for example a variable frequency starter generator may be used.

The motor may be powered by any suitable power unit. For example, the motor may be configured to be powered by a power unit which is separate from the aircraft on which the gas turbine engine 10 is provided. For example, the motor may be configured to be powered by a ground power unit to which the aircraft can be connected. Alternatively or additionally, the motor may be configured to be powered by an auxiliary power unit forming part of the aircraft to which the gas turbine engine 10 is provided. The auxiliary power unit may be configured provide power to the aircraft when the gas turbine engine 10 is shut down and therefore not providing power to the aircraft systems. The auxiliary power unit may be a gas generator located elsewhere in the aircraft, e.g. the tail, which provides power to the aircraft systems when the engines are not operational and ground power is not provided.

The controller may be configured to control the motor to rotate the compressor 14, 15 during shut-down of the gas turbine engine for a time period ending when at least one of the following conditions are met: the core temperature falls below a predetermined threshold temperature, a predetermined time period has elapsed, and start-up of the gas turbine engine is commenced. The controller may be configured to control the motor to end driving the compressor 14, 15 when a specific one of the above conditions are met (i.e. regardless of whether any of the other conditions are met), when a first one of the above conditions is met (i.e. whichever of the above conditions is met first) or when two or more of the above conditions are met (e.g. when two or more of the above conditions are met simultaneously).

When the engine core reaches, or is sufficiently close to, an ambient temperature, for example, formation of a temperature gradient within the core is no longer a risk. Accordingly, there is no need to provide an axial airflow through the core below the ambient temperature. Accordingly, the threshold temperature may be an ambient temperature. Accordingly, the controller may be connected to a core temperature sensor for sensing the temperature within the engine core 11. Additionally, the controller may be connected to an ambient temperature sensor for sensing the ambient temperature around the gas turbine engine 10.

The controller may be configured to control the motor to rotate the compressor during shut-down of the gas turbine engine for a time period beginning when at least one of the following conditions are met: the speed of rotation of the compressor falls below a predetermined threshold speed, and a predetermined time period has elapsed from a shut-down of the gas turbine engine. The controller may be configured to control the motor to begin driving the compressor 14, 15 when a specific one of the above conditions are met (i.e. regardless of whether any of the other conditions are met), when a first one of the above conditions is met (i.e. whichever of the above conditions is met first) or when both of the above conditions are met (e.g. when both of the above conditions are met simultaneously).

After shutdown of the gas turbine engine 10, the compressors 14, 15 and turbines 17, 19 begin to decelerate. Initially, they rotate at high speeds so continue to provide an axial airflow through the core 11. However, below a particular rotation speed a buoyant airflow field will begin to form within the engine core 11. Accordingly, the predetermined threshold speed may be a speed below which a buoyant airflow field may form within the engine core 11. Accordingly, the controller may be connected to a rotational speed sensor for sensing the rotational speed of the compressor 14, 15 rotated by the motor.

The controller may be an engine controller configured to control the gas turbine engine 10 more generally. For example, the controller may be configured to control a start-up motor of the gas turbine engine 10. Additionally, the controller may be configured to control the combustion equipment 16. For example, the controller may be configured to control ignition of, and fuel input to the combustion equipment 16, thus controlling the thrust provided by the gas turbine engine 16. Accordingly, the airflow generator may comprise existing systems already present within the gas turbine engine 10 and additionally provided for functions other than rotating the compressor 14, 15 during shut-down.

The described method is also an example of a method of maintaining a gas turbine engine whilst the gas turbine engine is shut down, the method comprising:
establishing an airflow within a core of the gas turbine engine to reduce axial asymmetry in an airflow field within the core, during a time period after shut-down and before start-up of the gas turbine engine.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of maintaining a gas turbine engine whilst the gas turbine engine is shut down, the gas turbine engine comprising a core and the method comprising:
providing an axial airflow through the core, during a time period after shut-down and before start-up of the gas turbine engine.

2. The method of any preceding claim, wherein the provided airflow enters the core through a first end thereof and exits the core through a second end thereof, the second end being opposite the first end in an axial direction of the core.

3. The method of any preceding claim, wherein the provided airflow disrupts or prevents formation of a buoyant airflow field within the core.

4. The method of any preceding claim, wherein the provided airflow generates a substantially axisymmetric airflow field within the core.

5. The method of any preceding claim, wherein the core comprises a compressor and the airflow is provided by rotating the compressor and optionally or preferably the compressor is rotated at a speed of either (a) from 10 rpm to 1000 rpm or (b) from 10 rpm to 100 rpm.

6. The method of any previous claim, wherein the time period for which the airflow is provided elapses when one or more of the following conditions are met: the core temperature falls below a predetermined threshold temperature, a predetermined time-period has elapsed, and start-up of the gas turbine engine is commenced.

7. A gas turbine engine (10) for an aircraft, the gas turbine engine (10) comprising:
an engine core (11) comprising at least one turbine (17, 19), at least one compressor (14, 15), at least one core shaft (26, 27) connecting the at least one turbine (17, 19) to the at least one compressor (14, 15); and
an airflow generator configured to generate an axial airflow though the engine core (11) during a time period after shut-down and before start-up of the gas turbine engine (10).

8. The gas turbine engine (10) of claim 7, wherein the generated airflow enters the core through a first end thereof and exits the core through a second end thereof, the second end being opposite the first end in an axial direction of the core.

9. The gas turbine engine (10) of claim 7 or claim 8, wherein either:
(a) the generated airflow is configured to disrupt or prevent formation of a buoyant airflow field within the core; or
(b) the generated airflow is configured to generate a substantially axisymmetric airflow field within the core.

10. The gas turbine engine (10) according to any one of claims 7 to 9, wherein the airflow generator comprises a motor for rotating a compressor (14, 15) and a controller for controlling the motor and optionally or preferably wherein the controller is configured to control the motor to rotate the compressor (14, 15) at a speed of either (a) from 10 rpm to 1000 rpm or (b) from 10 rpm to 100 rpm.

11. The gas turbine engine (10) of claim 10, wherein the core comprises first and second compressors (14, 15) configured to operate at lower and higher pressures, respectively.

12. The gas turbine engine (10) of claim 11, wherein the motor is configured to rotate either the first compressor or the second compressor.

13. The gas turbine engine (10) according to any one of claims 10 to 12, comprising an auxiliary gearbox between the motor and the at least one core shaft (26, 27) for transmitting power from the motor to the compressor (14, 15) of the air flow generator.

14. The gas turbine engine (10) according to any one of claims 10 to 13, wherein the motor is a starter motor configured to be operated during start-up of the gas turbine engine (10) and optionally or preferably the motor is configured to switch to a generator mode after start-up of the gas turbine engine (10).

15. The gas turbine engine (10) according to any one of claims 10 to 14, wherein:
(a) the motor is a variable frequency electric motor; or
(b) the motor is configured to be powered by a power unit which is separate from the aircraft on which the gas turbine engine is provided; or
(c) the gas turbine engine comprises an auxiliary power unit and the motor is configured to be powered by the auxiliary power unit.
